# EUROPEAN PATENT APPLICATION

(11) **EP 4 195 082 A1**
(43) Date of publication of application: **14.06.2023**
(21) Application number: 21275180.4
(22) Date of filing: 09.12.2021
(51) Int. Cl.: G06F 21/62, G06F 16/93, G06F 21/56

(54) **DOCUMENT SANITISER**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A method of sanitising a document is provided. The method comprises: receiving at least one document having embedded document objects; identifying the document file format of the at least one document; using the document file format to convert the document to an XML format; in the XML document, finding reference to the document objects; redacting, deleting or ignoring the document objects; and converting the modified XML document into the original document file format to create a reformed document. A document sanitiser, a computer program and a non-transitory machinereadable storage medium are also provided.

## Description

### TECHNICAL FIELD

Aspects relate, in general, to a method of sanitising a document. Aspects also relate to a document sanitiser, and a computer program for sanitising a document.

### BACKGROUND

When a document is exported from a network, there can be additional information remaining hidden within it, which the user is unaware of or has forgotten is there. This could include sensitive information.

For a Microsoft Office productivity document, this additional information could include track changes, comments, undo history or author details. Other file types could also include fields which are not required or intended for export. Accidental release of this hidden information could lead to a damaging data breach.

Therefore, there is a need for a tool to remove this potentially harmful information for a user, particularly in long documents where the user can easily overlook artefacts when they are checking the document.

### SUMMARY

According to an aspect of the present invention, there is provided a method of sanitising a document, the method comprising:
receiving at least one document having embedded document objects;
identifying the document file format of the at least one document;
using the document file format to convert the document to an XML format;
in the XML document, finding reference to the document objects;
redacting, deleting or ignoring the document objects; and
converting the modified XML document into the original document file format to create a reformed document.

Advantageously, the method increases security by reducing the chance of secret or confidential metadata being published or transmitted in error.

The method may comprise redacting, deleting or ignoring the document objects in response to a user selection or a preconfigured selection stored in memory.

The method may comprise transmitting the reformed document through a network.

The document objects may comprise at least one of a tracked change, a comment, hidden text, author name, a header, or a footer. The document objects may be contained in a metadata field.

The method may comprise displaying the reformed document.

The method may comprise receiving a plurality of documents having embedded document objects. The method may comprise processing each document as a batch.

According to another aspect of the present invention, there is provided a document sanitiser, comprising a processor for carrying out the method according to the preceding aspect.

The document sanitiser comprises a display device for displaying the reformed document to a user.

The document sanitiser may comprise a network interface for receiving the at least one document through a network.

The document sanitiser may comprise a user input for creating the at least one document and a storage means for storing the created at least one document.

The document sanitiser may be a mail transfer agent. Alternatively, the document sanitiser may be a user device such as a PC, laptop, tablet, or mobile phone. The document sanitiser may be a server.

According to an aspect of the present invention, there is provided a computer program comprising instructions which, when executed by a processor, cause the processor to carry out the method according to the first aspect.

According to another aspect of the present invention, there is provided a non-transitory machine-readable storage medium comprising instructions which, when executed by a processor, cause the processor to carry out the method according to the first aspect.

### BRIEF DESCRIPTION OF THE DRAWINGS

For a more complete understanding of the present disclosure, reference is now made, by way of example only, to the following descriptions taken in conjunction with the accompanying drawings, in which:
Figure 1 is a schematic representation of a document sanitiser accoding to an embodiment;
Figure 2 is an example of a document which could be sanitised using embodiments of the present invention; and
Figure 3 is a flowchart illustrating a method of sanitising a document according to an embodiment.

### DESCRIPTION

Example embodiments are described below in sufficient detail to enable those of ordinary skill in the art to embody and implement the apparatus and processes herein described. Embodiments can be provided in alternate forms and should not be construed as limited to the examples set forth herein. Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a", "an", and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises", "comprising", "includes" and/or "including", when used herein, specify the presence of stated features, items, steps, operations, elements, and/or components, but do not preclude the presence or addition of one or more other features, items, steps, operations, elements, components, and/or groups thereof.

Generally, embodiments herein described relate to a document sanitiser which could be implemented on a computing device, such as a PC. The sanitiser is configured to receive user-generated documents and identify and remove (i.e. delete), redact or ignore metadata in those documents according to a preconfigured user selection. This tends to increase security, as it prevents documents from being published or otherwise exported with artefacts or metadata left in that could compromise security. In other words, embodiments tend to make the process of document clearance less prone to human error.

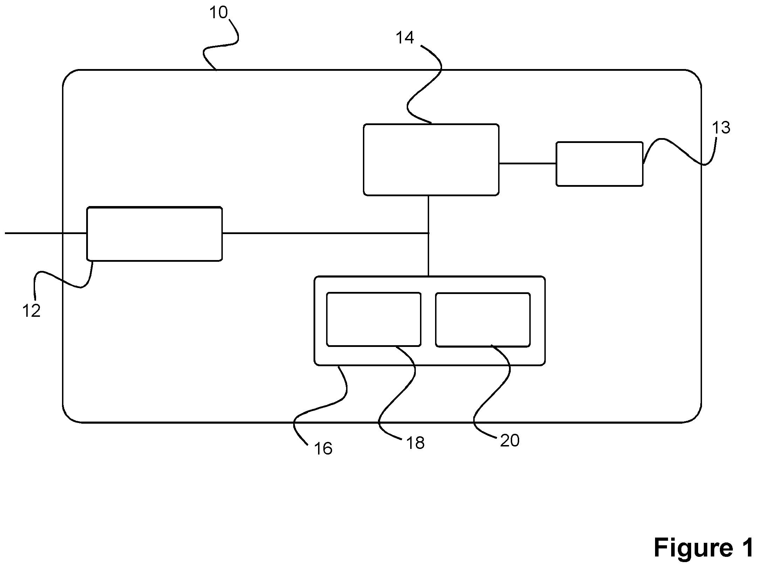

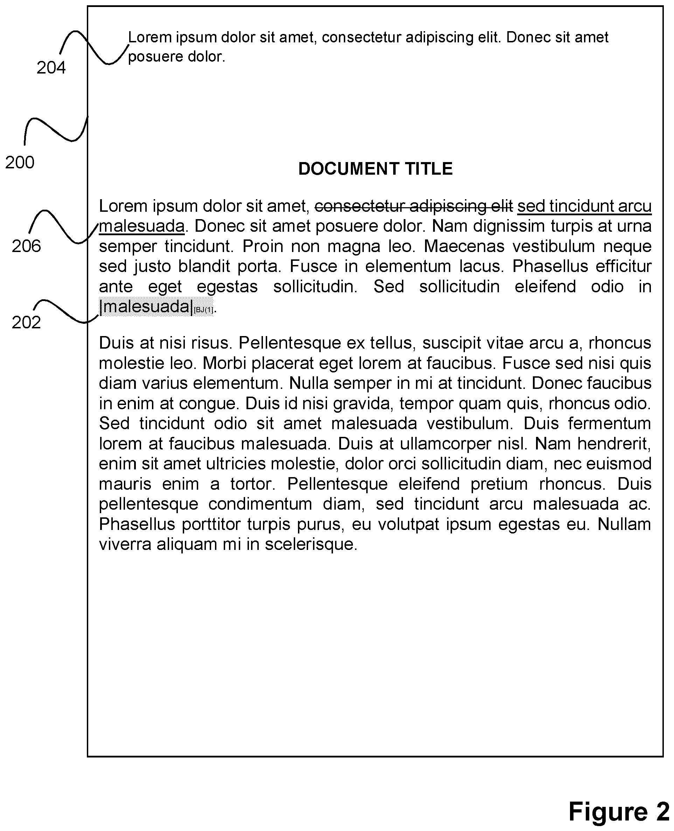

A document sanitiser 10 will now be described with reference to Figure 1. The document sanitiser 10 includes a software module implemented on a computing device, with the computing device having software for receiving or generating a document. Here, documents are defined as user-generated documents that include metadata. The metadata may be automatically inserted into the document, or entered by the user. Metadata may include: an author's name; time last edited; filepath; hidden text; comments contained in balloons or other supplementary content presentation appended to the document body; stamps or tags; and tracked changes to the content of the document. Therefore, documents as defined here include, among others, Microsoft Excel spreadsheets, Adobe^{®} PDF files, Google Docs TM, Google Sheets TM, Microsoft Word documents, and Microsoft PowerPoint presentation files. An example document 200 showing a comment 202, header 204, and tracked changes 206 is shown in Figure 2. Computing devices on which the sanitiser module may be implemented include, for example and not limited to, a desktop PC, a laptop, a server, a notebook, a tablet or a mobile phone.

As illustrated, the document sanitiser 10 is a server, for example a mail exchange server or mail transfer agent, for sanitising documents before being received by end users. The server may be a cloud server. Therefore, the document sanitiser 10 does not here include a user input, such as a keyboard, or a display device, although it would be appreciated that in other embodiments the document sanitiser 10 may include such components.

The document sanitiser 10 in the illustrated embodiment includes a network interface 12, a controller 14, Random Access Memory (RAM) 13, and a memory 16. The memory 16 may be a non-volatile memory such as read only memory (ROM), a hard disk drive (HDD) or a solid state drive (SSD). The memory 16 stores, amongst other things, an operating system 18 and at least one software application 20. The RAM 13 is used by the controller 14 for the temporary storage of data. The operating system 18 may contain code which, when executed by the controller 14 in conjunction with the RAM 13, controls operation of each of the hardware components of the document sanitiser 10. One of the software applications 20 is a document sanitiser program for removing artefacts (metadata) from documents 200. The document sanitiser program is separate to and independent of any other program stored in the memory 16, such as a Microsoft Office program.

By making the document sanitiser program independent of any other programs, the attack surface for Malware programs tends to be reduced.

The controller 14 may take any suitable form. For instance, it may be a microcontroller, plural microcontrollers, a processor, or plural processors.

The network interface 12 as illustrated is a wired interface. In alternative embodiments, the network interface 12 is a wireless interface. The network interface 12 may, for example, be a Wi-Fi, Bluetooth, Zigbee, Ethernet, GSM, LTE, 5G, or Universal Serial Bus (USB) interface. In the illustrated embodiment, the network interface 12 is for communicatively connecting the document sanitiser 10 to a plurality of networked devices, such as a laptop computer.

A document 200 is received by the document sanitiser 10 through the network interface 12. The document 200 may be received through the network interface 12 via a network such as the Internet, a VPN, a LAN or a WAN. Alternatively, the document may be created on the document sanitiser 10, where the document sanitiser 10 is a user device having a plurality of software programmes, a display and user input device to aid the user in creating the document 200. Once the received document 200 is sanitised using the document sanitiser program, it is transmitted through the network interface 12 to a recipient device for display or printing.

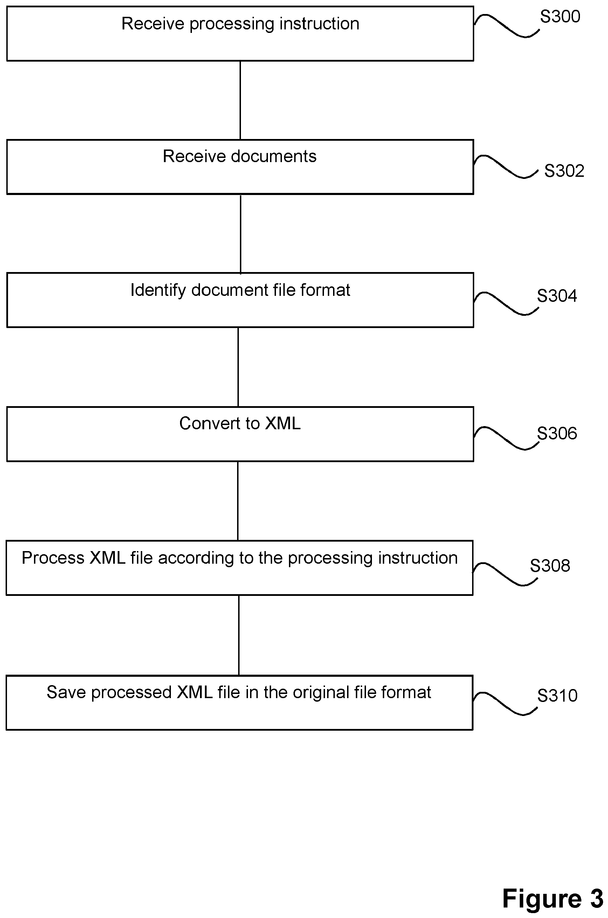

The operation of the controller 14, as instructed by the software application 20, will now be described with reference to the flowchart of Figure 3.

In a first step S300, a processing instruction is received by the controller 14. The processing instruction is a selection of how to manage metadata in a document 200. For example, a user selects how the document sanitiser 10 is to sanitise documents 200. In other words, the user selects a document processing option. This user input may be by a control signal received through the network interface 12. Alternatively, the user input for selecting the processing option may be directly input into the document sanitiser 10 using a hardware device such as a keyboard. The user selection is stored in the memory 16. The user selection is one of removing, redacting or ignoring data in an artefact (metadata) field. For example, the user may select to remove the author's name, but redact comments so that it can be seen a comment was made. The user selection of a processing option may be made during setup of the sanitiser 10, and therefore may not be repeated after each operation. In other words, the sanitiser 10 may be preconfigured with a processing instruction stored in memory 16.

In a second step S302, the memory 16 receives a document 200. The document 200 may be received from an external source, such as a networked device, or generated on the document sanitiser 10 using a user input and stored in the memory 16. The document 200 may be received via email.

In a third step S304, the document 200 file format is identified. For example, the document 200 may be in the .docx or .pdf file format.

In a fourth step S306, the controller 14 is operative to convert the stored document 200 into an Extensible Markup Language (XML) format. The controller 14 is operative to convert a variety of different document file types, for example .docx, .xlsx and .pptx, rather than being limited to one particular program output. The controller 14 converts the document 200 to XML format by unzipping the originally received document. A database of known routines may be used to convert file formats into XML.

In a fifth step S308, the XML file is processed according to the processing instruction. For example, all metadata fields may be made blank.

In a sixth step S310, the document is reformed (i.e. reconstituted) into its original file format, with the metadata having been processed, such that a sanitised version of the document 200 can be exported, published or forwarded on (i.e. transmitted).

It should be noted that some of the process steps depicted in the flowchart of Figure 3 and described above may be omitted or such process steps may be performed in differing order to that presented above and shown in Figure 3. Furthermore, although all the process steps have, for convenience and ease of understanding, been depicted as discrete temporally-sequential steps, nevertheless some of the process steps may in fact be performed simultaneously or at least overlapping to some extent temporally. Furthermore, the process steps may be performed continuously.

Such machine-readable instructions may also be loaded onto a computer or other programmable data processing devices, so that the computer or other programmable data processing devices perform a series of operations to produce computer-implemented processing, thus the instructions executed on the computer or other programmable devices provide an operation for realizing functions specified by flow(s) in the flow charts and/or block(s) in the block diagrams.

Further, the teachings herein may be implemented in the form of a computer software product, the computer software product being stored in a storage medium and comprising a plurality of instructions for making a computer device implement the methods recited in the examples of the present disclosure.

While the method, apparatus and related aspects have been described with reference to certain examples, various modifications, changes, omissions, and substitutions can be made without departing from the present disclosure.

Where, in the foregoing description, integers or elements are mentioned that have known, obvious, or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional do not limit the scope of the independent claims. Moreover, it is to be understood that such optional integers or features, while of possible benefit in some embodiments of the disclosure, may not be desirable, and can therefore be absent, in other embodiments.

Microsoft, Windows, PowerPoint and Excel are trade marks of the Microsoft group of companies.

## Claims

1. A method of sanitising a document, the method comprising:
receiving at least one document having embedded document objects;
identifying the document file format of the at least one document;
using the document file format to convert the document to an XML format;
in the XML document, finding reference to the document objects;
redacting, deleting or ignoring the document objects; and
converting the modified XML document into the original document file format to create a reformed document.

2. The method as claimed in claim 1, comprising redacting, deleting or ignoring the document objects in response to a user selection or a preconfigured selection stored in memory.

3. The method as claimed in claim 1 or claim 2, comprising transmitting the reformed document through a network.

4. The method as claimed in any preceding claim, wherein the document objects comprise at least one of a tracked change, a comment, hidden text, author name, a header, or a footer.

5. The method as claimed in any preceding claim, comprising displaying the reformed document.

6. The method according to any one of the preceding claims, comprising receiving a plurality of documents having embedded document objects.

7. A document sanitiser, comprising a processor for carrying out the method according to any one of the preceding claims.

8. The document sanitiser according to claim 7, comprising a display device for displaying the reformed document to a user.

9. The document sanitiser according to claim 7 or claim 8, comprising a network interface for receiving the at least one document through a network.

10. The document sanitiser according to claim 7 or claim 8, comprising a user input for creating the at least one document and a storage means for storing the created at least one document.

11. The document sanitiser according to claim 9, wherein the document sanitiser is a mail transfer agent.

12. A computer program comprising instructions which, when executed by a processor, cause the processor to carry out the method according to any one of claims 1 to 6.

13. A non-transitory machine-readable storage medium comprising instructions which, when executed by a processor, cause the processor to carry out the method according to any one of claims 1 to 6.
